# EUROPÄISCHE PATENTANMELDUNG

(11) **EP 1 480 045 A1**
(43) Veröffentlichungstag der Anmeldung: **24.11.2004**
(21) Anmeldenummer: 04405302.3
(22) Anmeldetag: 12.05.2004
(51) Int. Cl.: G01R 5/16, G02B 26/10, G06K 15/12, H04N 1/053, H04N 1/047, H02K 33/00, H02K 33/16, H02K 29/08

(54) **Scanner**

(30) Priorität: 22.05.2003 CH 9152003
(71) Anmelder: Keiser, Heinz, CH-8143 Stallikon (CH); Keiser, Claudia, 8143 Stallikon (CH)
(72) Erfinder: Keiser, Heinz, CH-8143 Stallikon (CH); Keiser, Claudia, 8143 Stallikon (CH)
(74) Vertreter: Groner, Manfred

(57) **Zusammenfassung**

Der Scanner weist einen Scannermotor mit Stator (5) und Rotor (2) sowie einen mit dem Rotor (2) verbundenen Spiegel (3) auf. Der Rotor (2) wird mittels magnetischer Feldstärkenmessung positionsgesteuert. Dazu ist der Rotor (2) mit einem Dauermagnet (7) verbunden, dessen Magnetfeld mit wenigstens einem Magnetfeldstärke-Sensor (8) gemessen wird. Die Ausgangsspannung des Magnetfeldstärke-Sensors (8) wird mit einem Sollwert verglichen und aufgrund der ermittelten Differenz wird die Stromspeisung des Rotors (2) nachgestellt. Der erfindungsgemässe Scanner kann kostengünstiger und mit kleinerem Bauvolumen als bisher hergestellt werden.

## Beschreibung

Die Erfindung betrifft einen Scanner, mit einem Scannermotor, der einen Stator und eine in diesem gelagerten Rotor aufweist und mit einem mit dem Rotor verbundenen Spiegel zur Auslenkung eines Strahls, insbesondere Laserstrahls.

Im Stand der Technik sind Galvanometer-Scanner bekannt, die mit Positionsaufnehmer (closed-loop) und ohne Positionsaufnehmer (open-loop) arbeiten. Beim Scanner mit Positionsaufnehmer werden Soll- und Istwert in einer Regalschaltung (PD/PID-Regler) verarbeitet. Dies ermöglicht eine exakte Positionierung des angetriebenen Spiegels über den genannten Scan-Bereich. Bei optimaler Justierung der Treiber auf die verwendete Spiegelmasse können Über- und Unterschwingungen des Spiegels weitgehend eliminiert werden. Typische Anwendungen dieser Galvanometer-Scanner sind: Laser-Beschriftungen, Laser-Widerstandstrimmer, Laser-Messtechnik, Laser Druckindustrie, Laser-Mikroskopie, Laserlightshow.

In der Praxis haben sich diese Galvanometer-Scanner an sich bewährt.

Ein Scanner mit oszillierender Bewegung des Spiegels ist im Stand der Technik aus der EP-A-0 241 430 bekannt geworden. Dieser dient für die oszillierende Auslenkung eines Laserstrahls zur zeilenweisen Abtastung von Bildern. Der Scannermotor ist ein Gleichstrommotor, der mit Wechselstrom gespeist ist, sodass der Rotor eine harmonische Schwingung ausführt. Zur Festlegung einer Schwingungsmittelstellung ist an einem Spiegelträger ein Magnet mit einem radial nach aussen gerichteten Magnetpol befestigt. An einem Gehäuse ist ein weiterer Magnet ortsfest angebracht, sodass ein Gegenpol zum Pol des anderen Magneten gegenübersteht. Zur Auslenkung des Spiegels muss eine Kraft aufgewendet werden, die mit grösserem Abstand der beiden Magneten zueinander kleiner wird.

Der Erfindung liegt die Aufgabe zugrunde, einen Scanner der genannten Art zu schaffen, der kostengünstiger und in kompakterer Bauweise hergestellt werden kann.

Die Aufgabe ist bei einem gattungsgemässen Scannermotor dadurch gelöst, dass der Rotor mittels magnetischer Feldstärkenmessung positionsgesteuert ist. Es hat sich gezeigt, dass mit einer solchen Positionssteuerung des Rotors sehr kurze Reaktionszeiten und zudem eine sehr kompakte und leichte Bauweise möglich sind. Zudem wird er durch äussere Einflüsse, wie beispielsweise Fremdkörper, Erschütterungen und Licht kaum beeinflusst. Der wesentlich einfachere Aufbau ermöglicht eine wesentlich kostengünstigere Herstellung. Vorteilhaft sind zudem die höhere elektrische Stabilität, eine kleinere Abwanderung, eine kleinere Wärmeentwicklung und eine kleinere Masse und damit ein energiefreundlicher Betrieb.

Eine besonders kostengünstige und kompakte Bauweise ergibt sich dann, wenn gemäss einer Weiterbildung der Erfindung der Rotor einen Dauermagneten aufweist, der auf einen am Stator ortsfest montierten Magnetfeldstärke-Sensor wirkt. Eine dem Magnetfeldstärke-Sensor zugeführte, konstante Eingangsspannung (Sensor-Treiberspannung) speist eine Brückenschaltung (magnetische Feldstärken-Messbrücke). Dabei resultiert eine variable Ausgangsspannung (elektrisches Signal), die proportional ist zur Veränderung der Magnetfeldstärke in Abhängigkeit der Auslenkung des am Rotor befestigten Dauermagneten. Magnetfeldstärke-Sensoren sind an sich bekannt und kostengünstig erhältlich. Sie sind zudem mit hoher Sensibilität erhältlich. Solche Magnetfeldstärke-Sensoren werden beispielsweise von der Firma Philips mit der Typenbezeichnung KMZ-10 und KMZ-51/52 angeboten.

Besonders kurze Reaktionszeiten und eine hohe Funktionssicherheit wird dann erreicht, wenn gemäss einer Weiterbildung der Erfindung eine variable Ausgangsspannung des Magnetfeld-Sensors mit einem Sollwert verglichen wird und aufgrund der Differenz zwischen diesen beiden Werten die Stromspeisung des Rotors nachgestellt wird.

Eine besonders geeignete Positionssteuerung ergibt sich dann, wenn gemäss einer Weiterbildung der Erfindung die Differenz zwischen dem Signal des Magnetfeld-Sensors und der Sollspannung mit einem Analogrechner berechnet wird.

Der Dauermagnet ist drehfest auf dem Rotor angeordnet und weist diametral gegenüberliegend einen Süd- und Nordpol auf.

Zur Verhinderung von magnetischen Ausseneinflüssen ist gemäss einer Weiterbildung der Erfindung vorgesehen, dass der Scannermotor Mittel zur magnetischen Abschirmung aufweist. Diese Mittel weisen insbesondere eine Hülse auf.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: schematisch eine Ansicht eines erfindungsgemässen Scanners, wobei aus zeichnerischen Gründen Teile auseinandergezogen sind;
- Fig. 2: schematisch einen mit dem Rotor zu verbindenden Dauermagnet sowie einen bzw. zwei Magnetfeldstärke-Sensoren;
- Fig. 3: schematisch eine Ausführung mit zwei Magnetfeldstärke-Sensoren und einem Dauermagneten,
- Fig. 4: schematisch eine Ausführung mit einem Magnetfeldstärke-Sensor und einem Dauermagneten und
- Fig. 5: eine weitere Ausführung mit zwei Magnetfeldstärkesensoren und einem Dauermagnet.

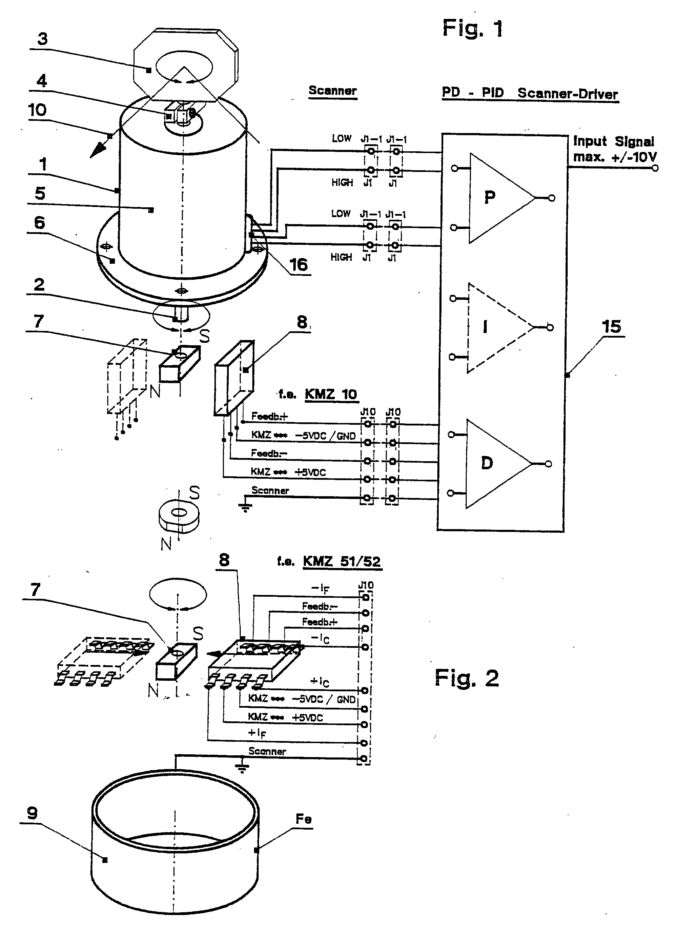

Der in Fig. 1 gezeigte Scanner 1 weist einen hier nicht gezeigten Rotor mit einer Welle 2 auf, der in einem Stator 5 gelagert ist. An einem Ende der Welle 2 ist mit einem Spiegelhalter 4 ein Spiegel 3 befestigt, der entsprechend der Bewegung der Welle 2 eine Auslenkung erfährt. Der mit der Welle 2 verbundene Spiegel 3 wird entsprechend bewegt und ein am Spiegel 3 reflektierter Strahl 10, insbesondere Laserstrahl, wird entsprechend ausgelenkt. Mit dem ausgelenkten Strahl 10 können beispielsweise auf einer Wand Punkte markiert oder ein Striche gezogen werden. Für zweidimensionale Anwendungen wird in bekannter Weise der Strahl 10 an zwei Scannern 1 rechtwinklig zueinander verlaufen. Damit sind beispielsweise Beschriftungen möglich. Soweit ist der Scanner 1 an sich bekannt.

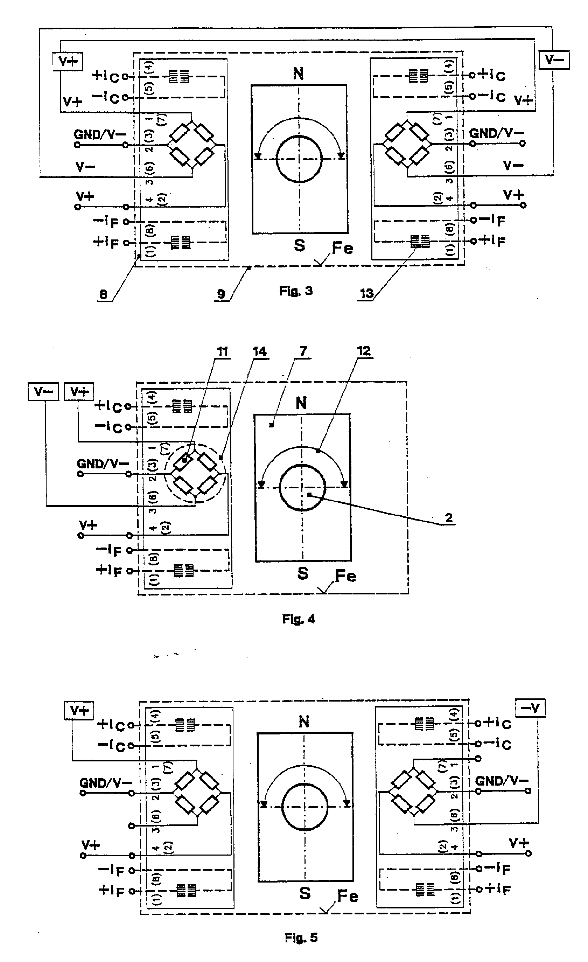

Die Welle 2 ist wie der erwähnte Stator 5 gelagert, der zu seiner Befestigung einen sich radial nach aussen erstreckenden Flansch 6 besitzt. Mit der Welle 2 ist ein Dauermagnet 7 drehfest verbunden, der gemäss den Fig. 3, 4 und 5 einen Südpol S und einen Nordpol N aufweist. Der Dauermagnet 7 kann ein separat hergestellter Dauermagnet oder aber der Dauermagnet des Rotors sein. Bei der gezeigten Ausführung ist der Dauermagnet 7 ein separat hergestelltes und mit der Welle 2 drehfest verbundenes Teil. Wird die Welle 2 um ihre Längsachse gedreht, so führt der Dauermagnet 7 die gleiche Bewegung aus, die in den Fig. 3, 4 und 5 in einer Richtung des Doppelpfeils 12 erfolgt. Eine Brückenschaltung 14 wird von einer konstanten Eingangsspannung V+ (Sensor-Treiberspannung) gespiesen. Die genannte Bewegung wird selbstverständlich auch von den beiden Polen S und N ausgeführt.

Am Stator 5 des Scanners 1 ist ein Magnetfeldstärke-Sensor 8 befestigt, der dem Magnetfeld des Dauermagneten 7 ausgesetzt ist. Der Magnetfeldstärke-Sensor 8 ist stationär angeordnet, während im Betrieb der Dauermagnet 7 wie oben erwähnt bewegt wird. Alternativ können auch zwei gegenüberliegende Magnetfeldstärke-Sensoren 8 angeordnet sein. In den Fig. 1 und 2 ist ein zweiter Magnetfeld-Sensor 8 mit gestrichelten Linien angedeutet. Die Ausführung mit zwei Magnetfeldstärke-Sensoren 8 ist in der Fig. 3 gezeigt. Grundsätzlich sind auch Ausführungen mit drei oder noch mehr Magnetfeldstärke-Sensoren 8 denkbar. Diese Magnetfeldstärke-Sensoren 8 sind jeweils so angeordnet, dass sie dem Magnetfeld des Dauermagneten 7 ausgesetzt sind. Die Ausführung mit zwei Magnetfeldstärke-Sensoren 8 ist besonders präzis.

Der Magnetfeldstärke-Sensor 8 weist eine magnetische Feldstärken-Messbrücke 11 und zwei sogenannte flip coils 13 auf. Eine Brückenschaltung 14 wird von einer konstanten Eingangsspannung V+ (Sensor-Treiberspannung) gespiesen. Bei einer sich rotierenden Welle 2 ändert sich die Magnetfeldstärke im Bereich des Magnetfeldstärke-Sensors 8 in Abhängigkeit der Auslenkung des am Rotor 2 befestigten Dauermagneten 7. Diese Magnetfeldstärke-Änderungen bewirken eine variable Ausgangsspannung V+/V- bzw. ein elektrisches Signal des Magnetfeldstärke-Sensors 8, welche proportional zur Veränderung der Magnetfeldstärke im Bereich des Magnetfeldstärke-Sensors 8 ist.

Mit einem elektrischen Rechner 15 insbesondere einem Analogrechner wird die Differenz zwischen der variablen Ausgangsspannung des Magnetfeldstärke-Sensors 8 und einem vorgegebenen Sollwert berechnet. Die Sollwerte werden in an sich beliebiger Weise erzeugt und eingegeben. In Abhängigkeit von dieser Differenz wird die Stromspeisung des Rotors nachgestellt und der Spiegel 3 positioniert. Anstelle eines Analogrechners 15 kann auch ein anderer geeigneter Rechner verwendet werden. In der Fig. 1 erfolgt die Stromspeisung an der Anschlussstelle 16 des Stators 5. Aufgrund der erwähnten Positionssteuerung des Rotors können Mittel zur Festlegung einer Schwingungsmittelstellung und insbesondere beispielsweise eine Torsionsfeder vermieden werden. Die Nullstelle kann elektrisch festgestellt werden, und somit kann eine Hemmung durch eine Torsionsfeder vermieden werden. Äussere Einflüsse wie beispielsweise Fremdkörper, Erschütterungen und dergleichen haben auf die erwähnte Positionssteuerung im Wesentlichen keinen Einfluss. Zur Verhinderung von magnetischen Ausseneinflüssen kann zudem der Scannermotor mit einer Abschirmung in der Form einer Hülse 9 aus Eisen abgeschirmt werden. Bei der Verwendung von zwei Scannern kann mit dem Strahl 10 im Wesentlichen jede Kurve gefahren werden. Zudem können im Raum Punkte genau positioniert werden. Der Scanner 1 eignet sich beispielsweise zum Beschriften, für Reklamezwecke, zum Zeichnen und Markieren.

## Patentansprüche

1. Scanner mit einem Scannermotor, der einen Stator (5) und einen in diesem gelagerten Rotor (2) aufweist und mit einem mit dem Rotor (2) verbundenen Spiegel (3) zur Auslenkung eines Strahls (10), insbesondere Laserstrahls, **dadurch gekennzeichnet, dass** der Rotor (2) mittels magnetischer Feldstärkenmessung positionsgesteuert ist.

2. Scanner nach Anspruch 1, **dadurch gekennzeichnet, dass** zur magnetischen Feldstärkenmessung am Stator (5) wenigstens ein Magnetfeldstärke-Sensor (8) und am Rotor (2) ein Dauermagnet (7) vorgesehen sind.

3. Scanner nach Anspruch 2, **dadurch gekennzeichnet, dass** eine variable Ausgangsspannung des Magnetfeldstärke-Sensors (8) mit einem Sollwert verglichen wird und dass aufgrund der ermittelten Differenz zwischen diesen beiden Werten die Stromspeisung des Rotors (2) nachgestellt wird.

4. Scanner nach Anspruch 3, **dadurch gekennzeichnet, dass** die Differenz zwischen dem Signal des Magnetfeldstärke-Sensors (8) und der Sollspannung mit einem Analogrechner (15) berechnet wird.

5. Scanner nach einem der Ansprüche 2 bis 4, **dadurch gekennzeichnet, dass** der Dauermagnet (7) auf dem Rotor (2) drehfest befestigt ist und diametral gegenüberliegend einen Südund Nordpol aufweist.

6. Scanner nach einem der Ansprüche 1 bis 5, **dadurch gekennzeichnet, dass** er Mittel (9) zur magnetischen Abschirmung aufweist.

7. Scanner nach einem der Ansprüche 2 bis 6, **dadurch gekennzeichnet, dass** ein oder mehrere Magnetfeldstärke-Sensoren (8) vorgesehen sind.

8. Scanner nach Anspruch 7, **dadurch gekennzeichnet, dass** zwei Magnetfeldstärke-Sensoren (8) bezüglich eines Dauermagneten (7) diametral gegenüberliegend angeordnet sind.
